# EUROPEAN PATENT SPECIFICATION

(11) **EP 3 885 014 B1**
(45) Date of publication and mention of the grant of the patent: **16.08.2023**
(21) Application number: 20168397.6
(22) Date of filing: 07.04.2020
(51) Int. Cl.: A63H 29/20, A63H 33/00, A63H 33/04, A63H 33/10, B25J 9/08

(54) **SELF-ORGANIZING STRUCTURE OF MODULAR DESIGN**
SELBSTORGANISIERENDE STRUKTUR MIT MODULAREM DESIGN
STRUCTURE D'AUTO-ORGANISATION DE CONCEPTION MODULAIRE

(30) Priority: 24.03.2020 PL 43332320
(43) Date of publication of application: 29.09.2021
(73) Proprietor: Akademia Gorniczo-Hutnicza im. Stanislawa Staszica w Krakowie, 30-059 Krakow (PL)
(72) Inventor: Wajss, Pawel, 31-232 Kraków (PL)
(74) Representative: Kondrat, Mariusz

(56) References cited:
- WO-A1-2004/062759
- WO-A1-2014/032807
- WO-A1-2019/120155
- JP-A- H11 109 847
- US-A1- 2014 298 945

## Description

The subject of the invention is a self-organizing structure with a modular design, containing at least two structural components connected by connectors.

In the state of the art there are known modular structures.

The WO2004062759 A1 document discloses a system made of three-dimensional multifunctional components consisting of single solid elements that can move, connect and disconnect from one another, and also contain programmable integrated circuits, locks for connecting individual components and electromagnets. A single component of the system has a housing consisting of walls interconnected by means of electroplastic actuators, which change the position of the walls of the housing of a single component. Changes in the mutual position of the walls take place depending on the excitation signal transmitted from the programmable chip. Heat emitters remove excess heat from system devices. A single component of the system is equipped with a voltage source supplying the integrated circuit, locks, electromagnets and the electroplastic actuators. The voltage source is preferably renewable through the use of solar cells. Preferably, fibre optic cables are used to provide object information and software instructions to the integrated circuit, as well as light to solar cells. The polarization of individual walls of a single component's housing depends on the position of a single component in the actual structure created according to the virtual structure of the object programmed in the integrated circuit to be created. A single component of a system of three-dimensional multifunctional components in an inactive state has all housing walls polarized with the same (negative or positive) magnetic pole. In an active state, the individual walls of a single component can be polarized with different magnetic poles. The method of connecting is based on the fact that a set of inactive components of equal polarity is placed in a container and subjected to constant controlled movement. A first component is activated and assigned an ordinal number in the actual object to be formed, and the component connects to the closest inactive single component. Then the memory of the integrated circuit is provided with information on the object to be formed and on the next ordinal number assigned. After connecting each subsequent component to the resulting structure, the connection is locked with locks. The connection procedure continues until all ordinal numbers are connected according to the data transmitted to the integrated circuit about the virtual object to be formed. The resulting structure of the object can be dispersed to the original state of individual components by deactivating the walls of the components and disconnecting the locks as a result of instructions transmitted to the integrated circuits.

The WO2014032807 A1 document pertains to the connecting structure consisting of connecting devices between components of automation systems, where the connecting structure provides a power or data connection between two components connected by connecting devices. Whereas the said provided connection is a frictional or contoured plug connection between two components connected by a connecting structure, or the connection may be affected by the first magnetic connecting component where the connecting structure provides a frictional or interlocking connection between two structural blocks.

The US2014298945 A1 document discloses a modular robotic system, which includes a number of self-organising robots, each of which contains a cubic housing with many cylindrical binding magnets located along the edge of the housing and a motion generator. The housing of each robot rotates to generate multi-axial movement, allowing both solid self-organization with other self-organizing robots and independent movement of each component. Whereas the magnets are located on the sides of the cubical housing and on its edges, the latter may rotate in relation to the axis parallel to the axis of a given edge. This allows robot housings to change their position without breaking the mutual connection. When the cubes touch one another with the sides, the bond is stronger because there are additional magnets on them. The structure made up of cubes according to the concept set out in patent US20140298945 A1 cannot take any shape whatsoever because it has only one resting position, i.e. the position in which the adjacent cubes make contact with their full sides.

The aim of the invention is to provide a new self-organising modular structure with a variable joining force of individual modules, able to take any shape.

The present invention is directed to a self-organizing structure of modular design containing at least two structural components joined with connectors according to claim 1.

Preferably, the ferromagnetic material is selected from a group including iron, cobalt, nickel, steel, iron alloys with nickel and cobalt, aluminium casting alloys with nickel and cobalt. Preferably, the housing consists of two double-layered hemispheres.

Preferably, the coordination module is provided with the means to transmit information to an external control system.

The housing preferably contains a power connector.

Preferably, the aerostatic bearing is porous.

Preferably, a layer of fluid provided through the air fitting is present between the structural component and the connector, wherein said fluid is over-pressure fluid or vacuum.

The magnet is preferably selected from a group including a permanent magnet or an electromagnet.

The invention provides the following advantages:
- the structure according to the invention is capable of joining, detaching, shift and rotate of each of its components and, as a result, forming the whole structure into any shape;
- the structure according to the invention makes it possible to control the bond strenght of individual components, which is not possible in other solutions;
- depending on the needs, the connectors provide a rigid or flexible connection;
- the structure according to the invention makes it possible to change between three connection states: rigid connection, flexible connection and no connection;
- the disclosed solution uses the moment of inertia of the flywheel to move the structural components;
- ability to form the structure into any shape with as little energy as possible. The shape is formed by using the moment of inertia of the flywheel. The variable coefficient of friction between the individual components ensures that the energy use is as low as possible and that the type of joint can be changed from flexible to rigid and vice versa;
- a thin layer of fluid (film) between the structural component and the connector minimises friction between the structural components;
- versatile possibilities of use, e.g. the structure according to the invention can be used for easy transport and quick forming of temporary structures of increased strength (e.g. flood dams).

The invention is shown in embodiments in figures, where fig. 1 means a single structural component according to the invention; fig. 2 shows a single structural component according to the invention with the drive motor with a brake shown, fig. 3 shows the design of the structure connector according to the invention, fig. 4 shows the cross-section through the structure connector according to the invention, fig. 5 shows the first variant of the structure according to the invention; fig. 6 shows the first variant of the invention, showing the inside of individual structural components, fig. 7 shows the second variant of the structure according to the invention; fig. 8 shows the second variant of the structure according to the invention with the interior of the individual structural components; fig. 9 shows the rotation of one structural component relative to another component which is stationary at a given moment, along the axis of rotation of a moving structural component in the variant where the two structural components have a common axis of rotation; fig. 10 shows the rotation of a single structural component relative to another structural component which is stationary at that particular moment, along the axis of rotation of the moving structural component in its alternative configuration, fig. 11 shows the rotation of the first and second structural components relative to the third and fourth structural components which are stationary at that particular moment, along the axis of rotation of the first component, fig. 12 shows the rotation of the structural component along its axis of rotation, allowing it to roll freely until it connects with the connector.

The invention is presented in the following embodiments.

### Embodiment 1

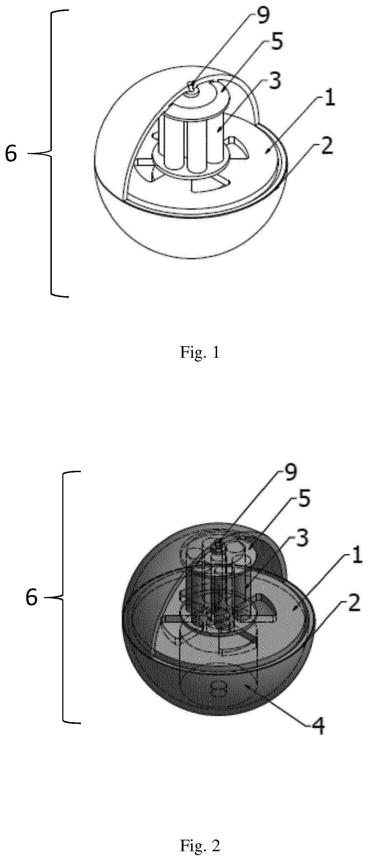

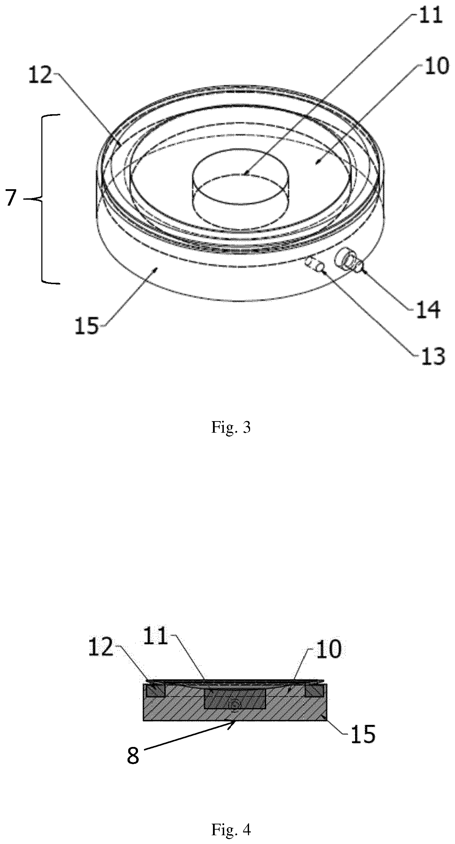

In this non-restrictive embodiment the self-organizing structure of modular design according to the invention is made of ten structural components **6** connected with connectors **7.** Whereas the structure of a single structural component **6** is shown in fig. 1-2, while fig. 3-4 shows the structure of a single connector **7.**

The structural component **6** which can rotate around one axis of rotation, using the moment of inertia by accelerating and braking the flywheel **1.** Accelerating and braking the flywheel **1** is effected by means of a drive motor with a brake **4.** The power supply for the drive motor with a brake **4** is provided by the energy storage module **3,** namely the accumulator/rechargeable battery. Charging of the energy storage module **3** is performed through a power connector **9.**

Whereas the charge level of the energy storage module **3,** the position of the structural component **6** in space and the control of the drive motor with a brake **4** is carried out by the coordinating module **5,** which transmits information to the external control system, using the means to transmit information to the external control system. Transmission of information is performed wirelessly, e.g. through Bluetooth.

All these components (i.e. the flywheel **1,** the energy storage module **3,** the drive motor with a break **4,** the coordinating module **5)** are enclosed in two single-layer, perfectly matched hemispheres which form the housing **2** of the structural component **6.** The housing **2** of the structural component **6** is susceptible to an external magnetic field. In this non-restrictive embodiment the housing is made of steel (which belongs to the group of ferromagnetics) and has a very accurate external dimension, which is selected so that a very thin layer (film) of fluid can be formed between the structural component **6** and the connector **7** to minimize friction between these components.

In this non-restrictive embodiment the housing **2** is made of steel, but other ferromagnetic materials can also be used, such as iron, cobalt or nickel.

Whereas the fluid in aerostatic bearings **10** is air. However, within the meaning of the invention, a film is defined as a very thin layer of fluid in a gaseous state. In this embodiment air is used as the aforementioned fluid, but other gases, such as carbon dioxide, can also be used.

Individual structural components **6** are connected with connectors **7.**

The connectors **7** with holders **15** are equipped with a profiled porous aerostatic bearing **10,** seals **12,** a power connector **13** and an air fitting **14,** and in each of the connectors **7** a magnet is embedded **11.** In this embodiment the magnet **11** used in an electromagnet, but a permanent magnet can also be used.

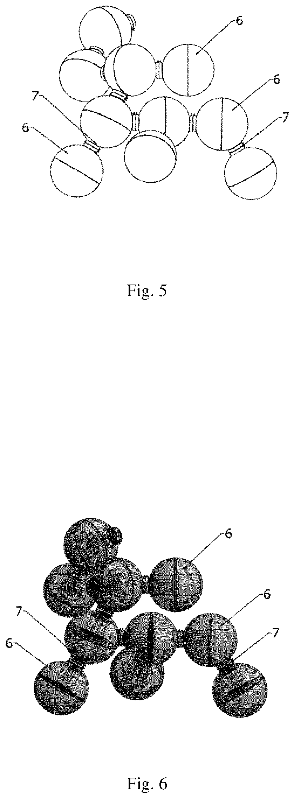

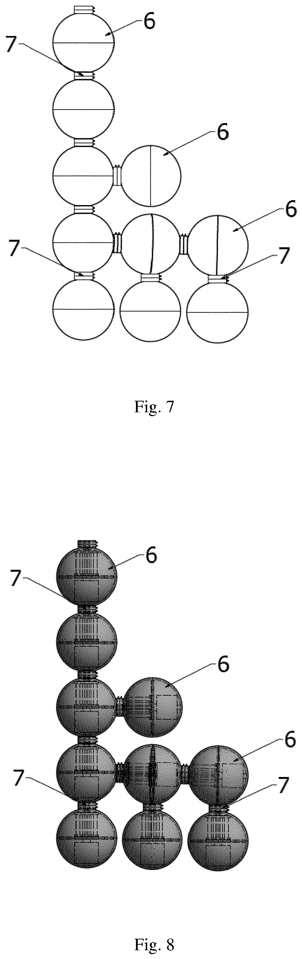

As indicated in fig. 5 and fig. 7 Individual structural components **6** are connected with two connectors **7.** Whereas connectors **7** between the structural component **6** and the base or a different surface are single connectors.

Two connectors **7** connecting two structural components **6** are connected with the bases **8** of connectors **7** in a permanent manner. In this non-restrictive embodiment the bases **8** of two connectors **7** are connected with each other by gluing. Whereas the permanent connection can be either a detachable connection (e.g. by bolting) or an inseparable connection (e.g. by welding).

The connectors **7** provide a connection between the structural components **6** which have variable characteristics, which means that under certain conditions the connection is rigid and under other conditions, it is flexible. These connection properties depend on the presence of a thin layer (film) of fluid between the connector **7** and the construction component **6.** If the film is present, the connection is flexible, if the film is not present, the connection is rigid. The force of the connection can be controlled. The film is created by the fluid provided by the air fitting **14** and is spread under the structural component **6** using a profiled aerostatic bearing **10.** This fluid has overpressure relative to the ambient area. Whereas the pressure value of the fluid depends on the magnetic force, where the force generated by the pressure profile must be greater or equal to the magnetic force for the structural component to "levitate" above the bearing surface. In this embodiment the fluid overpressure is 5 bar.

The connecting force is controlled automatically by an external control system that provide over-pressurized fluid or vacuum or vacuum to the air fitting **14** and the power connector **13** for the electromagnet supply. Automatic control enables simultaneous coordinated movements of parts of structures made up of many structural elements **6** and connectors **7.** The force control includes five variants, starting with the most rigid:
- When vacuum is provided and voltage is applied to the electromagnet, the connection is stable and very rigid;
- When vacuum is provided and no voltage is applied to the electromagnet, the connection is stable and rigid;
- When over-pressurized fluid nor vacuum are not provided, but voltage is applied to the electromagnet, the connection is stable;
- When over-pressurized fluid is provided, and voltage is applied to the electromagnet, the connection is flexible;
- When over-pressurized fluid is provided, but no voltage is applied to the electromagnet, there is no connection, the components are not bound by any force.

Regardless of the presence of fluid the structure retains its cohesion. For example if vacuum is provided through the air fitting **14** then between the connector **7** and the structural component **6** underpressure will be formed relative to the ambient area, and the tightness of the system will be maintained by a profiled seal **12.** Whereas, if between the connector **7** and the structural component **6** there is a film then the whole structure maintains its cohesion due to the presence of magnetic force between the magnet **11** (e.g. an electromagnet) embedded in the connector **7** and the housing **2** of the structural component **6.**

The structural component **6** through its movement relative to the neighbouring structural component **6** can form any structures, as shown in fig. 5-8. Movement of the structural component **6** is possible in any direction by using the acceleration or braking of the flywheel **1** installed inside it or by the movement of the neighbouring structural component **6** after making the connection between them more rigid by means of the connectors **7.** Wherein the flywheels **1** are able to generate forces necessary to overcome the gravitational forces related to the weight of the component itself and the weight of other components and connectors, which are shifted or rotated. Wherein the connector **7** is provided with a magnet **11** and an aerostatic bearing **10,** which make it possible to affect the force and type of joint of individual components from a very rigid connection formed by magnetic force and underpressure in the space between structural component **6** and the connector **7** through a flexible connection formed as a result of magnetic force and overpressure in the space between the structural component **6** and the connector **7** to absence of connection as a result of physical distancing of components to such a distance that the magnetic bond is not present or the magnetic field is not generated by the electromagnet. As a result, it is possible to obtain any position of structural components **6** and connectors **7,** and this translates into any shape of structures made of them.

As a result, the structure according to the invention is capable of joining, detaching, make relative moments of each of its components and, as a result, form the whole structure into any shape.

Such design of the structure offers versatile possibilities of use in many areas, e.g. the structure according to the invention can be used for easy transport and quick forming of temporary structures of increased strength (e.g. flood dams).

### Embodiment 2.

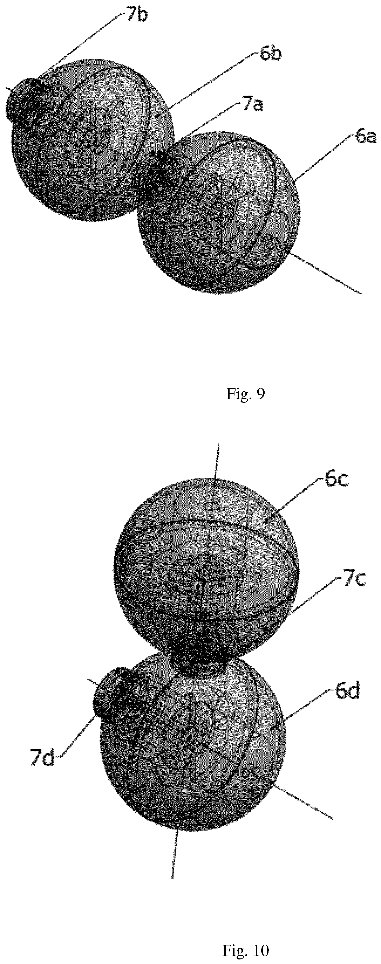

A self-organizing structure as in embodiment 1, but made of two structural components **6a** and **6b** connected with a connector **7a,** and the structural component **6b** is also provided with a connector **7b,** which does not take part in connecting the structural components **6a** and **6b.** The direction of rotation of the structure is presented in fig. 9, which shows the rotation of a structural component **6a** in relation to the structural component **6b,** which is stationary at that particular moment, along the axis of rotation **6a** when an over-pressurized fluid is provided to connector **7a** and a film is formed between structural components **6a** or **6b** and connector **7a,** and a flywheel **1** in the structural component **6a** is accelerated or braked.

### Embodiment 3.

A self-organizing structure as in embodiment 1, but made of two structural components **6c** and **6d** connected with a connector **7c,** and the component **6d** is also provided with a connector **7d,** which does not take part in connecting the structural components **6c** and **6d.** The direction of rotation of the structure is presented in fig. 10, which shows the rotation of the structural component **6c** in relation to the structural component **6d,** which is stationary at that particular moment, along the axis of rotation **6c** when over-pressurized fluid is provided to connector **7c** and a film is formed between structural components **6c** or **6d** and connector **7c,** and the flywheel **1** in the structural component **6c** is accelerated or braked.

In an alternative configuration, when the structural component **6c** is stationary, the rotation of the structural component **6d** with the connector **7d** relative to the stationary structural component **6c** takes place along the axis of rotation **6d.**

### Embodiment 4.

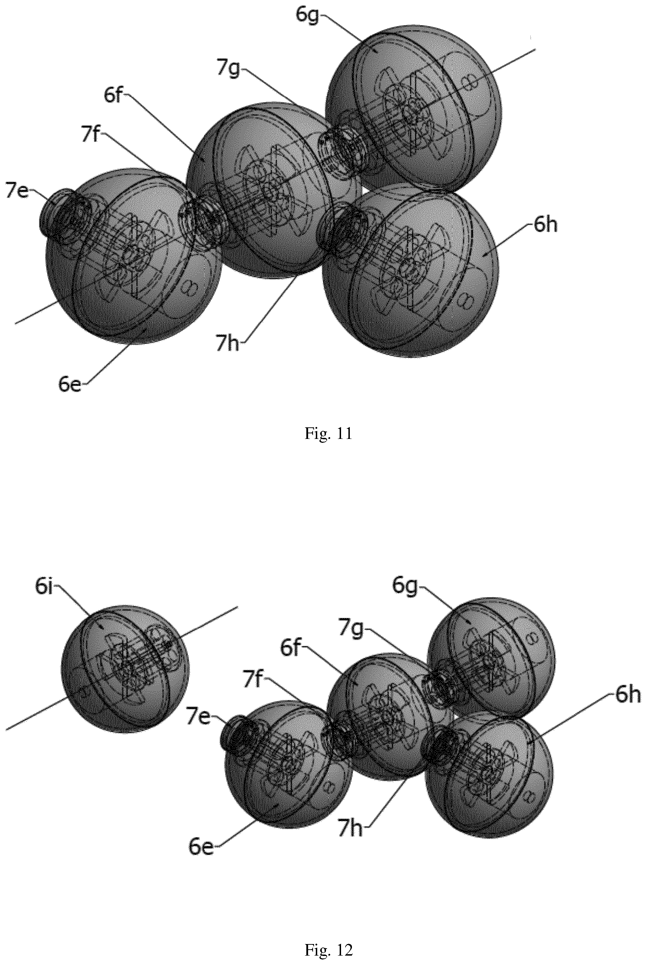

Self-organizing structure as in embodiment 1, but made of four structural components: **6e, 6f, 6g** and **6h,** and connectors **7e, 7f, 7g** and **7h.** Fig. 11 shows the rotation of structural components **6f** and **6h** relative to structural components **6e** and **6g,** which are stationary at that particular moment, along the axis of rotation **6f** when connector **7f** and **7g** is supplied with over-pressurized fluid and a film is formed between the structural components **6e** or **6f** and the connector **7f** and the structural components **6f** or **6g** and the connector **7g** with simultaneous underpressure between the structural components **6h** and **6f** and connector **7h** while the flywheel **1** in the structural component **6f** is accelerated or braked.

### Embodiment 5.

A self-organizing structure as in embodiment 1 made of four interconnected structural components: **6e, 6f, 6g,** and **6h,** of connectors **7e, 7f, 7g** and **7h** and a structural component **6i,** which, when it is at rest, is not connected with other structural components **6.** Fig. 12 shows the rotation of structural component **6i** along the axis of rotation **6i** able to roll freely to form a connection with connector **7e** with the use of the flywheel **1** in the structural component **6i,** which is accelerated or braked.

### Embodiment 6.

A self-organizing structure as in embodiment 1, except that the housing **2** is made of two double-layer hemispheres, in which the inner layer is ferromagnetic (e.g. steel), while the outer layer is made of plastic (e.g. polyethylene).

### Embodiment 7.

A self-organizing structure as in example 1, with the exception that the housing 2 is made of two double-layer hemispheres, in which the inner layer is made of plastic (e.g. poly(vinyl chloride)), and the outer layer is a ferromagnetic layer made for example of nickel.

### Embodiment 8.

Self-organizing structure as in example 6, but the inner layer is made up of iron dust applied to it.

## Claims

1. A self-organizing structure of modular design containing at least two structural components joined with connectors, where each of the structural components contains a housing, within which there is a drive, **characterized in that** the housing (2) of at least of two structural components (6) is made of two matching, at least single layer hemispheres, of which at least one layer is covered with a ferromagnetic material or is made of a ferromagnetic material; inside the housing (2) there is a flywheel (1) connected to a drive motor with a brake (4), representing the drive, which in turn is connected to an energy storage module (3); inside the housing there is a coordination module (5), which is connected to the flywheel (1), the drive motor with a brake (4) and the energy storage module (3); the connectors (7) are equipped with a profiled aerostatic bearing (10), profiled seals (12) and an air fitting (14), and in each connector (7) there is an embedded magnet (11); wherein a flat base (8) of each connector (7) is equipped with a holder (15) constituting a side surface of the connector (7), a top surface of the connector (7) being concave with a concave arc matching the curvature of the hemispheres, and having the top surface of the magnet (11) embedded in its centre; wherein the top surface of magnet (11) is surrounded concentrically by the aerostatic bearing (10) and the seal (12); wherein a power connector (13) and said air fitting (14) are located on the side surface of the holder (15).

2. Self-organizing structure according to claim 1 **characterized in that** the ferromagnetic material is selected from a group including iron, cobalt, nickel, steel, iron alloys with nickel and cobalt, aluminium casting alloys with nickel and cobalt.

3. Self-organizing structure according to claim 1 or 2, **characterized in that** the housing (2) is comprised of two double-layer hemispheres.

4. Self-organizing structure according to any of the previous claims 1 to 3, **characterized in that** the coordination module (5) is equipped with means of transmitting information to an external control system.

5. Self-organizing structure according to any of the previous claims 1 to 4 **characterized in that** the housing (2) contains a power connector (9).

6. Self-organizing structure according to any of the previous claims 1 to 5, **characterized in that** the aerostatic bearing (10) is porous.

7. Self-organizing structure according to any of the previous claims 1 to 6 **characterized in that** a layer of fluid provided through the air fitting (14) is present between the structural component (6) and the connector (7), wherein said fluid is over-pressure fluid or vacuum.

8. Self-organizing structure according to any one of the preceding claims 1 to 7 **characterized in that** the magnet (11) is selected from a group containing a permanent magnet and an electromagnet.

## Patentansprüche

1. Eine sich selbstorganisierende Struktur mit modularem Aufbau, die aus mindestens zwei durch Verbinder miteinander verbundenen strukturellen Elementen besteht, wobei jedes Element ein Gehäuse aufweist, in dem sich ein Antrieb befindet, **dadurch gekennzeichnet, dass** das Gehäuse (2) aus mindestens zwei strukturellen Elementen (6) aus zwei aneinander angepassten, mindestens einlagigen Halbkugeln besteht, von denen mindestens eine Lage mit einem ferromagnetischen Material beschichtet ist oder aus einem ferromagnetischen Material besteht; im Gehäuse (2) befindet sich ein Schwungrad (1), das an einen als Antrieb fungierenden Antriebsmotor mit der Bremse (4) angeschlossen ist, der wiederum mit einem Energiespeichermodul (3) verbunden ist; im Gehäuse befindet sich ein Koordinationsmodul (5), das an das Schwungrad (1), den Antriebsmotor mit der Bremse (4) und an das Energiespeichermodul (3) angeschlossen ist; die Verbinder (7) sind mit einem profilierten aerostatischen Lager (10), profilierten Dichtungen (12) und einem Luftnippel (14) ausgestattet, und in jedem Verbinder (7) befindet sich ein integrierter Magnet (11); wobei eine flache Basis (8) jedes Verbinders (7) mit einem Halter (15) ausgerüstet ist, der eine Seitenfläche des Verbinders (7) bildet, wobei die obere Fläche des Verbinders (7) konkav herausgebildet ist mit einem konkaven Bogen, der an die Krümmung der Halbkugeln angepasst ist, und wobei die obere Fläche des Magneten (11) in seiner Mitte integriert ist; wobei die obere Fläche des Magneten (11) konzentrisch im aerostatischen Lager (10) und in der Dichtung (12) eingelassen ist; wobei ein Stromanschluss (13) und der genannte Luftnippel (14) an der Seitenfläche des Halters (15) angeordnet sind.

2. Eine selbstorganisierende Struktur nach Anspruch 1, **dadurch gekennzeichnet, dass** das ferromagnetische Material aus einer Gruppe ausgewählt wird, die Eisen, Kobalt, Nickel, Stahl, Eisenlegierungen mit Nickel und Kobalt, Aluminiumgusslegierungen mit Nickel und Kobalt umfasst.

3. Eine selbstorganisierende Struktur nach Anspruch 1 oder 2, **dadurch gekennzeichnet, dass** das Gehäuse (2) aus zwei doppellagigen Halbkugeln besteht.

4. Eine selbstorganisierende Struktur nach einem der vorhergehenden Ansprüche 1 bis 3, **dadurch gekennzeichnet, dass** das Koordinationsmodul (5) mit Mitteln zur Übertragung von Informationen an eine externe Steuerung ausgestattet ist.

5. Eine selbstorganisierende Struktur nach einem der vorhergehenden Ansprüche 1 bis 4, **dadurch gekennzeichnet, dass** das Gehäuse (2) einen Stromanschluss (9) umfasst.

6. Eine selbstorganisierende Struktur nach einem der vorhergehenden Ansprüche 1 bis 5, **dadurch gekennzeichnet, dass** das aerostatische Lager (10) porös ausgeführt ist.

7. Eine selbstorganisierende Struktur nach einem der vorhergehenden Ansprüche 1 bis 6, **dadurch gekennzeichnet, dass** eine durch den Luftnippel (14) generierte Fluidschicht zwischen dem strukturellen Element (6) und dem Verbinder (7) besteht, wobei das Fluid ein Überdruckfluid oder Vakuum ist.

8. Eine selbstorganisierende Struktur nach einem der vorhergehenden Ansprüche 1 bis 7, **dadurch gekennzeichnet, dass** der Magnet (11) aus einer Gruppe ausgewählt wird, die einen Permanentmagneten und einen Elektromagneten umfasst.

## Revendications

1. Structure auto-organisatrice de conception modulaire contenant au moins deux composants structurels reliés par des connecteurs, où chacun des composants structurels contient un boîtier, à l'intérieur duquel se trouve un entraînement, **caractérisée en ce que** le boîtier (2) d'au moins deux composants structurels (6) est constitué de deux hémisphères appariés, au moins à une seule couche, dont au moins une couche est recouverte d'un matériau ferromagnétique ou est constituée d'un matériau ferromagnétique ; dans laquelle à l'intérieur du boîtier (2) se trouve un volant d'inertie (1) relié à un moteur d'entraînement avec un frein (4), représentant l'entraînement, qui est à son tour relié à un module de stockage d'énergie (3) ; dans laquelle à l'intérieur du boîtier se trouve un module de coordination (5), qui est relié au volant d'inertie (1), au moteur d'entraînement avec frein (4) et au module de stockage d'énergie (3) ; dans laquelle les connecteurs (7) sont équipés d'un palier aérostatique profilé (10), de joints profilés (12) et d'un raccord d'air (14), et dans chaque connecteur (7) se trouve un aimant intégré (11) ; dans laquelle une base plate (8) de chaque connecteur (7) est équipée d'un support (15) constituant une surface latérale du connecteur (7), une surface supérieure du connecteur (7) étant concave avec un arc concave correspondant à la courbure des hémisphères, et ayant la surface supérieure de l'aimant (11) encastrée en son centre ; dans laquelle la surface supérieure de l'aimant (11) est entourée concentriquement par le palier aérostatique (10) et le joint (12) ; dans laquelle un connecteur d'alimentation (13) et ledit raccord d'air (14) sont situés sur la surface latérale du support (15).

2. Structure auto-organisatrice selon la revendication 1 **caractérisée en ce que** le matériau ferromagnétique est choisi dans un groupe comprenant le fer, le cobalt, le nickel, l'acier, les alliages de fer avec le nickel et le cobalt, les alliages de fonte d'aluminium avec le nickel et le cobalt.

3. Structure auto-organisatrice selon la revendication 1 ou 2, **caractérisée en ce que** le boîtier (2) est constitué de deux hémisphères à double couche.

4. Structure auto-organisatrice selon l'une quelconque des revendications précédentes 1 à 3, **caractérisée en ce que** le module de coordination (5) est équipé de moyens de transmission d'informations à un système de contrôle externe.

5. Structure auto-organisatrice selon l'une des revendications précédentes 1 à 4 **caractérisée en ce que** le boîtier (2) contient un connecteur d'alimentation (9).

6. Structure auto-organisatrice selon l'une quelconque des revendications précédentes 1 à 5, **caractérisée en ce que** le support aérostatique (10) est poreux.

7. Structure auto-organisatrice selon l'une des revendications précédentes 1 à 6, **caractérisée en ce que** la présence, entre le composant structurel (6) et le connecteur (7), d'une couche de fluide fournie par le raccord pneumatique (14), ledit fluide étant un fluide de surpression ou un vide.

8. Structure auto-organisatrice selon l'une quelconque des revendications précédentes 1 à 7 **caractérisée en ce que** l'aimant (11) est choisi dans un groupe comprenant un aimant permanent et un électro-aimant.
